# EUROPEAN PATENT SPECIFICATION

(11) **EP 1 430 735 B1**
(45) Date of publication and mention of the grant of the patent: **06.02.2008**
(21) Application number: 01274501.4
(22) Date of filing: 20.09.2001
(51) Int. Cl.: H04Q 7/22, H04Q 7/38, H04Q 7/16

(54) **METHOD AND NETWORK ELEMENT FOR PROVIDING LOCATION SERVICES USING PREDETERMINED PORTIONS OF A BROADCAST SIGNAL**
VERFAHREN UND NETZWERKELEMENT ZUR BEREITSTELLUNG VON ORTSDIENSTEN UNTER VERWENDUNG VORBESTIMMTER TEILE EINES RUNDFUNKSENDESIGNALS
PROCEDE ET ELEMENT RESEAU DESTINES A FOURNIR DES SERVICES DE LOCALISATION AU MOYEN DE PARTIES PREDETERMINEES D'UN SIGNAL DE RADIODIFFUSION

(43) Date of publication of application: 23.06.2004
(73) Proprietor: Nokia Corporation, 02150 Espoo (FI)
(72) Inventor: NIEMENMAA, Jarko, FIN-02920 Espoo (FI)
(74) Representative: Ungerer, Olaf
(86) International application number: PCT/EP2001/010913
(87) International publication number: WO 2003/028392

(56) References cited:
- WO-A-00/56089
- WO-A-01/99459
- US-A- 5 878 033

## Description

### FIELD OF THE INVENTION

The present invention relates to a location method and system for performing an assisted location of a wireless terminal device in a cellular network.

### BACKGROUND OF THE INVENTION

Location systems utilize one or more positioning mechanisms in order to determine the location of a terminal device, such as a mobile station, a user equipment or any other kind of radio terminal. Positioning a target terminal device involves signal measurements and a location estimate computation based on the measured signals. In general, a location or position estimate provides the geographic location of a mobile station and/or a valid mobile equipment, expressed in latitude and longitude data. The location estimate can be represented in a predetermined universal format.

Positioning mechanisms for location systems in a GSM (Global System for Mobile communication) cellular system may be based on an uplink time of arrival (TOA) mechanism, Observed Time Difference (OTD) mechanisms (e.g. OTDOA or Enhanced OTD (E-OTD)), a Global Positioning System (GPS) assisted mechanism, a cell identity (Cl) based mechanism, or any combination thereof. As a fall-back procedure, a Timing Advance (TA) parameter can be used to assist all above positioning mechanisms. The TA value is usually known for the serving base transceiver station (BTS) to obtain TA values in case the concerned mobile station is in an idle mode. A special call not noticed by the user or subscriber of the mobile station is set up, and the cell identity (CI) of the serving cell and the TA is returned in response to this call.

The E-OTD method is based on measurements in the mobile station of the enhanced observed time difference of arrival of bursts of nearby pairs of BTSs. To obtain an accurate triangulation, E-OTD measurements are needed for at least three distinct pairs of geographically dispersed BTSs. Based on the measured E-OTD values, the location of the mobile station can be calculated either in the network or in the mobile station itself, if all the needed information is available in the mobile station.

The GPS method refers to any of several variants that make use of GPS signals or additional signals derived from the GPS signals in order to calculate the position of the mobile station.

The location system is logically implemented in a cellular network through the addition of a network node, the Mobile Location Center (MLC). In particular, a Gateway Mobile Location Center (GMLC) is provided, which is the first node which an external client accesses in the cellular network. The GMLC requests routing information from a home subscriber database, e.g. the Home Location Register (HLR) or the Home Subscriber Server (HSS), performs registration authorization and sends positioning request to and receives final location estimates from the network. Furthermore, a Serving Mobile Location Center (SMLC) is provided at the radio access network (RAN), e.g. GERAN (GPRS RAN) or UTRAN (UMTS Terrestrial RAN) and arranged to manage the overall coordination and scheduling of resources required to perform positioning or location of a mobile or wireless terminal device. It also calculates the final location estimate and accuracy. In one cellular network, there may be more than one SMLC and GMLC.

The SMLC controls a number of location measurement units (LMUs) for the purpose of obtaining radio interface measurements to locate or help locate mobile station subscribers in the area that it serves. The signaling between an NSS based SMLC and an LMU is transferred via the MSC serving the LMU, while the signaling between a BSS based SMLC and an LMU is transferred via the BSC that serves or controls the LMU.

The SMLC and GMLC functionality may be combined in the same physical node, combined in existing physical nodes, or reside in different nodes of the cellular network.

A more detailed description of the known location systems is disclosed in the GSM specification 03.71.

E-OTD location systems require measurements made at both LMUs and mobile terminals. It is by comparing the two sets of OTDs that a location estimate can be determined. In order to reduce signaling requirements each LMU's measurements of OTDs are only reported at intervals by the LMU to the SMLC. For MS-based E-OTD the OTDs can be reported case by case or periodicallyto the mobile terminals. The maximum allowable interval between LMU reports depends on both predictability of the BTS frequency source and the level of accuracy required for the location estimate.

In assisted GPS location systems, assistance data is transmitted from a GPS reference network to the concerned mobile terminal to thereby increase performance of the GPS sensor. Thereby, sensor start-up time and handset power consumption can be reduced and sensor sensitivity improved. Additional assisted data such as differential GPS corrections, approximate handset location or cell base station location and others can be transmitted to improve the location accuracy and decrease acquisition time. Typical transmissions include time, reference location, satellite ephemeris and clock corrections. If better position accuracy is required for certain applications, differential GPS (DGPS) data must be transmitted to the mobile terminal frequently (approximately every 30 s).

In known GSM based systems, a Short Message Service Cell Broadcast (SMSCB) system or Teleservice 23 as specified in the GSM specification 02.03 is used to broadcast data to mobile terminals. The source and subject of an SMSCB message is identified by a message identifier in the SMSCB message header. A sequence number in the SMSCB message header enables the mobile terminal to determine when a message from a given source is available. The network may broadcast Schedule Messages providing information in advance about the following messages that will be sent immediately afterwards.

However, SMSCB messages can be too short to include location data for many base stations for example. There, WO 00/56089 represents a possible solution for this problem by providing a message transfer method enabling the transfer of maximum amount of information in one fixed-length message. According to WO 00/56089, a payload portion of a message comprises content information defining the contents of the payload portion of the message and information elements, which are defined by the content information. A required number of information elements can be included in a fixed-length message, whereby a number of bits depending on the quantity and length of the information elements is used to represent corresponding information elements in question.

Furthermore, another problem, not disclosed in WO 00/56089, can arise as the network may override the published schedule to transmit new high-priority SMSCB messages. However, after any such schedule deviation, the network must resume the schedule by transmitting the scheduled messages at the scheduled times listed in the Schedule Message.

According to an example of such a conventional broadcast scheme, message sending schedules are calculated one minute in advance. Then, 31 messages are scheduled at a time, wherein the transmission of one message lasts about 1.88s. The message sending schedule is included in every broadcasted message. Thus, when a new LCS message is intended to be broadcast, it must be put into the next message sending schedule, i.e. the message transmission is delayed. Based on the transmission status of the message sending schedule, the delay interval may range between 2s and and about 2min. Thus, on the average, every new LCS message is delayed by about 1 min. However, such an amount of delay is not acceptable for broadcasting e.g. E-OTD and DGPS assistance data. If the new LCS message is transmitted earlier (i.e. as a high-priority message), the scheduled message transmission to the mobile terminal has to be stopped, recalculated and restarted. This leads to an increased power consumption at the mobile terminal and to a mixing of the sending schedule.

### SUMMARY OF THE INVENTION

It is an object of the present invention to provide a method and network element for providing an assisted location service, by means of which the broadcast delay can be reduced.

This object is achieved by a method of providing an assisted location service in a cellular network, the method comprising the steps of:
reserving predetermined time portions of a broadcast signal broadcast by the cellular network, for the assisted location service;
selecting at least one of the reserved time portions, when a location message is to be transmitted; and
broadcasting the location message within the selected time portion.

Furthermore, the above object is achieved by a network element for providing an assisted location service in a cellular network, the network element being arranged to select at least one of predetermined reserved time portions when a location message is to be transmitted, and to broadcast the location message within the selected time portion.

Accordingly; a high priority scheduling of the LCS broadcast information can be provided by reserving predefined time slots and corresponding message numbers to the location service. Due to the fixed reservation for LCS purposes, a new LCS message can be put to the next free time portion or time slot. Thus, the maximum delay for the new LCS message corresponds to the time until the next reserved time portion appears.

Preferably, the reserving step is performed by making a fixed reservation for the assisted location service in a message sending schedule of a short message service cell broadcast. In this case, the predetermined time portions correspond to predetermined message numbers of the message sending schedule. In particular, the predetermined time portions may recur at a period of ten messages. Thus, a new LCS message can be transmitted every ten messages.

The fixed reservation can be made by setting at least one predetermined radio network parameter. In particular, the at least one predetermined radio network parameter may define the number of sequential messages per time portion reserved for the assisted location service. Additionally, a second radio network parameter may be used, which defines a sending interval for the LCS messages. Furthermore, the predetermined time portions may comprise first time portions allocated to a first assisted location service, e.g. an E-OTD location service or any other assisted location service, and second time portions allocated to a second assisted location service, e.g. a DGPS location service or any other GPS based location service. Thereby, two assisted location services can be supported by one broadcast signal or channel.

The setting of the predetermined time portions can be performed by a setting means provided in the network element, based on a radio network parameter determined by a network operator.

### BRIEF DESCRIPTION OF THE DRAWINGS

In the following, the present invention will be described in greater detail on the basis of a preferred embodiment with reference to the accompanying drawings, in which:
- Fig. 1: shows a schematic diagram of an assisted location service according to the preferred embodiment; and
- Figs. 2A and 2B: show different reservation schemes for a short message service cell broadcast scheme according to the preferred embodiment.

### DESCRIPTION OF THE PREFERRED EMBODIMENT

The preferred embodiment will now be described on the basis of a mobile-based GPS location service using an SMSCB scheme for broadcasting LCS assistance data.

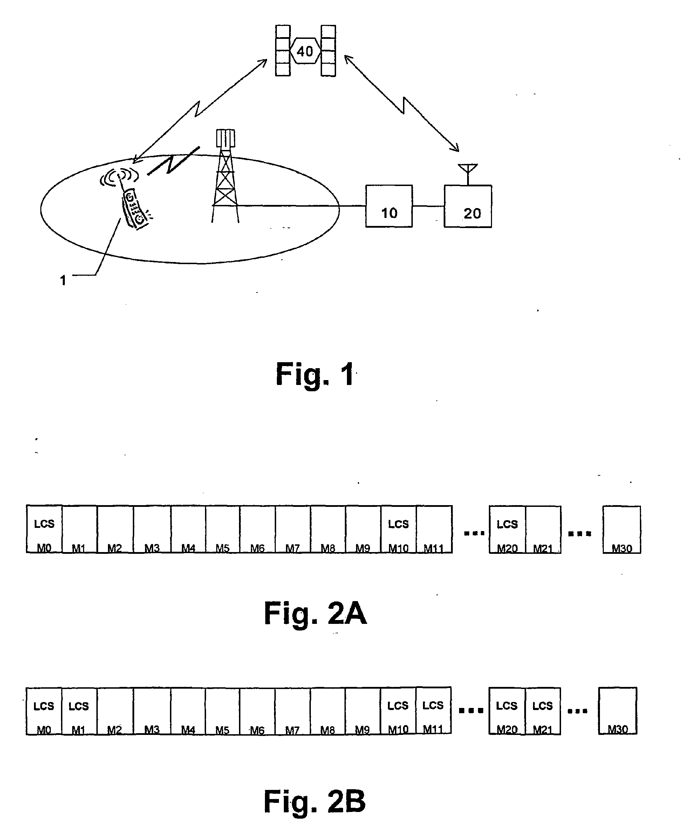

Fig. 1 shows a schematic diagram of the assisted-GPS architecture. The basic idea of this architecture is to establish a GPS reference network or a wide-area differential GPS network whose receivers have clear views of the sky and can operate continuously. This reference network is also connected with a cellular network, e.g. a GSM or WCDMA (Wideband Code Division Multiple Access) network, serving a mobile terminal device 1. At the request of a terminal- or network-based application, assistance data from the reference network are transmitted to the mobile terminal device 1 to increase performance of a GPS sensor provided at the mobile terminal device 1.

If the GPS receiver at the mobile terminal device 1 does not know its approximate location, it will not be able to determine the visible satellites or estimate the range and Doppler frequency of these satellites. It has to search the entire code phase and frequency spaces to locate the visible satellites. The relative movements between a satellite 40 and the GPS receiver at the mobile terminal device 1 make the search even more time consuming. Therefore, the time-to-first-fix (TTFF) is one important parameter to evaluate the quality of the GPS receiver. By transmitting assistance data over the cellular network, the TTFF can be reduced from more than ten minutes to a few seconds. This significantly reduces the search window of the code phase and frequency spaces, hence, the start-up time. Furthermore, because of the availability of the satellite navigation message transmitted via the cellular network, it can also assist the GPS receiver when the satellite signals are too weak to demodulate useful information. Moreover, it reduces the power dissipation of the mobile terminal device 1 by going to the idle mode whenever there is no need for location services.

In Fig. 1, a GPS reference network is connected to a base transceiver station (BTS) or Serving Mobile Location Center 10 which is arranged to transmit the GPS assistance data to the mobile terminal device 1. By using a DGPS system the position error can be reduced to less than five meters by using a reference GPS receiver 20 at a served position to send correction information to the mobile GPS receiver at the mobile terminal device 1 over a communications link. Since the DGPS data is valid for a large geographical area, the one centrally located GPS reference receiver 20 can be used to serve this large region. The final position of the mobile terminal device 1 is generated at the terminal itself. The calculated location can then be sent to an application outside of the mobile terminal device 1, if required.

According to the preferred embodiment, a fixed reservation for LCS purposes is made in the messing sending schedule of the SMSCB scheme used for broadcasting the DGPS assistance data from the BTS or SMLC 10 to the mobile terminal device 1. This can be achieved by using a new radio network parameter and providing a setting function or unit at the BTS or SMLC 10 or any other corresponding network element, for setting this new radio network parameter. Using this setting functionality, the network operator can determine by a corresponding message, instruction or programming how much broadcasting capacity it wants to reserve for LCS messages.

As an example, the radio network parameter may indicate how many successive or sequential messages of the message sending schedule are reserved for LCS purposes. If the value of the parameter is set to "1", this means that messages 0,10 and 20 of the available 31 messages are pre-reserved for LCS. Fig. 2A indicates the message sending schedule for this case, wherein the messages M0, M10 and M20 of the sending schedule are reserved for LCS purposes and can be used by the BTS or SMLC 10 to transmit the DGPS data to the mobile terminal device 1.

As another example, the new radio network parameter may be set by the network operator to the value "2". This means, that messages 0, 1, 10, 11, 20 and 21 are pre-reserved for LCS purposes. If the length of each of the messages M0 to M30 corresponds to 82 Octets, LCS messages having a length of 164 Octets can now be broadcasted using a period of 20 seconds. Fig. 2B shows a message sending schedule for this case, wherein the messages M0, M1, M10, M11, M20, and M21 of the sending schedule are pre-reserved for LCS purposes, while the remaining messages can be used for the conventional broadcast message scheduling of other broadcast messages, which also applies to the remaining messages in Fig. 2A.

Thus, whenever a new LCS broadcast is needed, the next free or available pre-reserved LCS broadcast message in the sending schedule is used, such that the maximum delay corresponds to 22 seconds assuming the reservations indicated in Figs. 2A and 2B.

The reserved time portions for the LCS messages could be shared for different kinds of LCS broadcast messages in advance. As an example, LCS messages could be broadcasted using e.g. messages 0,1, 2, 10, 11, 12, 20, 21, and 22. Then, the time portions corresponding to messages 0, 1, 10, 11, 20, and 21 could be reserved for the transmission of DGPS assistance data and the time portions corresponding to messages 2, 12, and 22 could be reserved for the transmission of E-OTD assistance data.

According to another example, two radio network parameters may be used. The first parameter may determine the sending interval, i. e. the distance between the pre-reserved LCS messages, and the second parameter may determine the number of messages which can be sent sequentially. Thereby, the network operator may define both the length of an LCS message (second parameter) and the interval between LCS messages (first parameter).

If only GPS ephemeris data is broadcasted, a sending interval of one minute is sufficient and only one message is required. If the system is used for broadcasting e.g. both E-OTD assistance data and DGPS assistance data, the sending interval could be set to 20 seconds and four sequential messages could be provided. Thus, 12 out of 31 messages are then used for broadcasting LCS messages, which corresponds to 39 % of the broadcasting capacity.

It is to be noted that the present invention is not restricted to the above preferred embodiment and can be used in any broadcasting scheme where individual messages are scheduled and broadcast via predetermined signal portions. In particular, any suitable regular or even non-regular reservation scheme can be implemented. The preferred embodiment may thus very within the scope of the attached claims.

## Claims

1. A method of providing an assisted location service in a cellular network, **characterized in that** said method comprises the steps of:
a) reserving predetermined time portions of a broadcast signal broadcast by said cellular network, for said assisted location service;
b) selecting at least one of said reserved time portions when a location message is to be transmitted; and
c) broadcasting said location message within said selected time portion.

2. A method according to claim 1, wherein said reserving step is performed by making a fixed reservation for said assisted location service in a message sending schedule of a short message service cell broadcast.

3. A method according to claim 2, wherein said predetermined time portions correspond to predetermined message numbers of said message sending schedule.

4. A method according to claim 3, wherein said predetermined time portions recur at a predetermined sending period.

5. A method according to any one of claims 2 to 4, wherein said fixed reservation is made by setting at least one predetermined radio network parameter.

6. A method according to claim 5, wherein said at least one predetermined radio network parameter defines the number of sequential messages per time portion reserved for said assisted location service.

7. A method according to claim 5, wherein said at least one predetermined radio network parameter comprises a first parameter defining a sending interval and a second parameter defining the number of sequential messages per sending interval.

8. A method according to any one of the preceding claims, wherein said pre- determined time portions comprise first time portions allocated to a first assisted location service and second time portions allocated to a second assisted location service.

9. A method according to claim 8, wherein one of said first and second as- sisted location services is a GPS based location service.

10. A network element for providing an assisted location service in a cellular network, **characterized in that** said network element (10) is arranged to select at least one of predetermined reserved time portions when a location messages is to be transmitted, and to broadcast said location message within said selected time portion.

11. A network element according to claim 10, further comprising setting means for setting said predetermined time portions based on a radio network parameter determined by a network operator.

## Patentansprüche

1. Verfahren zum Bereitstellen eines unterstützten Ortsdienstes in einem zellularen Netzwerk, **dadurch gekennzeichnet, dass** das Verfahren die Schritte umfasst:
a) Reservieren vorbestimmter Zeitabschnitte eines durch das zellulare Netzwerk rundgesendeten Rundfunksendesignals für den unterstützten Ortsdienst;
b) Auswählen wenigstens eines der reservierten Zeitabschnitte, wenn eine Ortsnachricht zu übertragen ist; und
c) Rundsenden der Ortsnachricht innerhalb des ausgewählten Zeitabschnittes.

2. Verfahren gemäß Anspruch 1, wobei der Reservierungsschritt durch Ausführen einer festen Reservierung für den unterstützten Ortsdienst in einer Nachrichtensendeliste einer Kurznachrichtendienst-Zellenrundsendung ausgeführt wird.

3. Verfahren gemäß Anspruch 2, wobei die vorbestimmten Zeitabschnitte vorbestimmten Nachrichtennummern der Nachrichtensendeliste entsprechen.

4. Verfahren gemäß Anspruch 3, wobei sich die vorbestimmten Zeitabschnitte in einer vorbestimmten Sendeperiode wiederholen.

5. Verfahren gemäß einem der Ansprüche 2 bis 4, wobei die feste Reservierung durch Einstellen wenigstens eines vorbestimmten Funknetzwerkparameters ausgeführt wird.

6. Verfahren gemäß Anspruch 5, wobei der wenigstens eine vorbestimmte Funknetzwerkparameter die für den unterstützten Ortsdienst reservierte Anzahl sequentieller Nachrichten pro Zeitabschnitt definiert.

7. Verfahren gemäß Anspruch 5, wobei der wenigstens eine vorbestimmte Funknetzwerkparameter einen ersten ein Sendeintervall definierenden Parameter und einen zweiten die Anzahl sequentieller Nachrichten pro Sendeintervall definierenden Parameter umfasst.

8. Verfahren gemäß einem der vorhergehenden Ansprüche, wobei die vorbestimmten Zeitabschnitte erste zu einem ersten unterstützten Ortsdienst zugeteilte Zeitabschnitte und zweite zu einem zweiten unterstützten Ortsdienst zugeteilte Zeitabschnitte umfassen.

9. Verfahren gemäß Anspruch 8, wobei einer der ersten und zweiten unterstützten Ortsdienste ein auf GPS basierender Ortsdienst ist.

10. Netzwerkelement zum Bereitstellen eines unterstützten Ortsdienstes in einem zellularen Netzwerk, **dadurch gekennzeichnet, dass** das Netzwerkelement (10) ausgestaltet ist, um wenigstens einen vorbestimmten reservierten Zeitabschnitt auszuwählen, wenn eine Ortsnachricht zu übertragen ist, und um die Ortsnachricht innerhalb des ausgewählten Zeitabschnitts rundzusenden.

11. Netzwerkelement gemäß Anspruch 10, weiter umfassend eine Einstelleinrichtung zum Einstellen der vorbestimmten Zeitabschnitte basierend auf einem durch einen Netzwerkbetreiber bestimmten Funknetzwerkparameter.

## Revendications

1. Procédé en vue de fournir un service de localisation assisté dans un réseau cellulaire, **caractérisé en ce que** ledit procédé comporte les étapes consistant à :
a) réserver des parties temporelles prédéterminées d'un signal de radiodiffusion diffusé par ledit réseau cellulaire, pour ledit service de localisation assisté ;
b) sélectionner au moins l'une desdites parties temporelles réservées lorsqu'un message de localisation doit être transmis ; et
c) diffuser ledit message de localisation dans ladite partie temporelle sélectionnée.

2. Procédé selon la revendication 1, dans lequel ladite étape de réservation est exécutée en effectuant une réservation fixe pour ledit service de localisation assisté au sein d'une planification d'envoi de messages d'une radiodiffusion de cellule de service de message court.

3. Procédé selon la revendication 2, dans lequel lesdites parties temporelles prédéterminées correspondent à des numéros de message prédéterminés de ladite planification d'envoi de messages.

4. Procédé selon la revendication 3, dans lequel lesdites parties temporelles prédéterminées se représentent à une période d'envoi prédéterminée.

5. Procédé selon l'une quelconque des revendications 2 à 4, dans lequel ladite réservation fixe est exécutée en réglant au moins un paramètre de réseau radio prédéterminé.

6. Procédé selon la revendication 5, dans lequel ledit au moins un paramètre de réseau radio prédéterminé définit le nombre de messages séquentiels par partie temporelle réservée pour ledit service de localisation assisté.

7. Procédé selon la revendication 5, dans lequel ledit au moins un paramètre de réseau radio prédéterminé comporte un premier paramètre définissant un intervalle d'envoi et un second paramètre définissant le nombre de messages séquentiels par intervalle d'envoi.

8. Procédé selon l'une quelconque des revendications précédentes, dans lequel lesdites parties temporelles prédéterminées comportent des premières parties temporelles affectées à un premier service de localisation assisté et des secondes parties temporelles affectées à un second service de localisation assisté.

9. Procédé selon la revendication 8, dans lequel l'un desdits premier et second services de localisation assisté est un service de localisation à base de système de positionnement mondial (GPS).

10. Élément de réseau en vue de fournir un service de localisation assisté dans un réseau cellulaire, **caractérisé en ce que** ledit élément de réseau (10) est agencé en vue de sélectionner au moins l'une parmi des parties temporelles réservées prédéterminées lorsqu'un message de localisation doit être transmis, et en vue de diffuser ledit message de localisation dans ladite partie temporelle sélectionnée.

11. Élément de réseau selon la revendication 10, comportant en outre des moyens de réglage en vue de régler lesdites parties temporelles prédéterminées sur la base d'un paramètre de réseau radio déterminé par un opérateur de réseau.
